# EUROPEAN PATENT APPLICATION

(11) **EP 2 207 311 A1**
(43) Date of publication of application: **14.07.2010**
(21) Application number: 08848385.4
(22) Date of filing: 31.10.2008
(51) Int. Cl.: H04L 12/46, H04M 3/56

(54) **VOICE COMMUNICATION DEVICE**

(30) Priority: 08.11.2007 JP 2007290793
(71) Applicant: Yamaha Corporation, Hamamatsu-shi, Shizuoka 430-8650 (JP)
(72) Inventor: The designation of the inventor has not yet been filed
(74) Representative: Carstens, Dirk Wilhelm
(86) International application number: PCT/JP2008/069905
(87) International publication number: WO 2009/060798

(57) **Abstract**

An art capable of transmitting a voice separated for each speaker when voice communications are conducted in a state that a plurality of communication terminals are connected in a cascade mode is provided. When a conference is started, each participant using each terminal 10-n speaks. A voice data generation section 106 of each terminal 10-n collects the voice of each participant and generates voice data. The generated voice data is sent to a different terminal 10-n. On the other hand, the terminal 10-n determines the presence or absence of sound production for each of voice signals of a plurality of channels received from each different terminal 10-n and assigns the input channel detected to be in a sound production state to any of output channels.

## Description

### Technical Field

This invention relates to a voice communication apparatus.

### Background Art

An art for persons at remote locations to conduct a teleconference by voice using communication terminals connected to a communication network is proposed. In this art, the communication terminals placed at different locations are connected to a center apparatus through the communication network and voices sent from the communication terminals are mixed in the center apparatus for transmission to the communication terminals.

The center apparatus mixes voices sent from a large number of communication terminals and thus there is a problem in that the mixing computation load becomes higher as the number of connected communication terminals is larger. To solve such a problem, for example, Patent Document 1 discloses an art of mixing voices from a predetermined number of sites in the descending order of voice levels, thereby limiting the amount of voice data handled by the center apparatus. Patent Document 2 discloses an art of so-called silence suppression of sending no packet when the voice level is equal to or less than a predetermined level to decrease the communication data amount.
Patent Document 1: JP-A-4-084553
Patent Document 2: JP-A-10-500547

### Disclosure of the Invention

### Problems to be Solved by the Invention

By the way, in addition to the voice communication system using the center apparatus as described above, a system wherein a plurality of communication terminals are connected in a cascade mode for conducting voice communications is also proposed. In such a system, each of the terminals connected in the cascade mode mixes voices from a plurality of sites and thus the user of the terminal cannot understand which terminal the voice produced from each terminal is transmitted from (namely, who speaks). Then, it is considered that a plurality of communication terminals are connected in a mesh mode rather than the cascade mode. If a plurality of communication terminals are connected in the mesh mode, each communication terminal can receive the voice from any other terminal in a separation state. However, if a plurality of communication terminals are connected in the mesh mode, it is necessary to reserve as many channels as the number of terminals and the system configuration becomes complex; this is a problem.

In view of the circumstances described above, it is an object of the invention to provide an art capable of transmitting a voice separated for each speaker when voice communications are conducted in a state that a plurality of communication terminals are connected in a cascade mode.

### Means for Solving the Problems

To solve the problems described above, preferably, a voice communication apparatus of the invention comprises: a reception section that receives a set of voice signals of a plurality of channels from each of a plurality of terminals; an acquisition section that acquires a voice signal output from a sound collection section; a sound production presence/absence determination section that determines the presence or absence of sound production about the voice signals of the a plurality of channels received by the reception section and the voice signal acquired by the acquisition section respectively; a channel assignment section that assigns the voice signal, which is determined that there is the presence of the sound production by the sound production presence/absence determination section, to a plurality of output channels; and a distribution section that distributes a set of voice signals assigned to the plurality of output channels by the channel assignment section to each of the plurality of terminals.

In the configuration described above, the reception section may receive a set of voice signals of three channels from each of the plurality of terminals, and the channel assignment section may assign the voice signal, which is determined that there is the presence of sound production by the sound production presence/absence determination section, to any of three output channels.

In the configuration described above, the voice communication apparatus may include a storage section that stores a correspondence between the channels and sound producing sections for outputting voices based on the voice signals; and an output section that supplies the voice signal for each of the channels received by the reception section to the sound producing section corresponding to the channel of each of the voice signals based on the correspondence stored in the storage section.

In the configuration described above, the voice communication apparatus may include a storage section that stores a correspondence between the channels and modes of sound image localization; and a sound image localization control section that localizes the sound image of the voice signal for each of the channels received by the reception section in the mode of sound image localization corresponding to the channel of each of the voice signals based on the correspondence stored in the storage section.

In the configuration described above, the reception section may receive the set of voice signals of the plurality of channels and metadata indicating attributes of the voice signals from each of the plurality of terminals respectively, and the distribution section may distribute the set of voice signals assigned to the plurality of output channels by the channel assignment section and the metadata corresponding to the voice signals to each of the plurality of terminals.

In the configuration described above, the metadata may contain terminal identification information for identifying the terminal which generates the voice signal for each of the channels. The voice communication apparatus may further include a storage section that stores a correspondence between the terminal identification information and a mode of sound producing; and an output control section that outputs the voice signal for each of the channels received by the reception section to the sound producing section so as to produce a sound in the mode of sound producing in response to the terminal identification information corresponding to each of the voice signals based on the correspondence stored in the storage section.

In the configuration described above, the metadata may contain sound production presence/absence data indicating a determination result of the sound production presence/absence determination section. The sound production presence/absence determination section may determine the presence or absence of the sound production about the voice signals of the plurality of channels received by the reception section based on the sound production presence/absence data contained in the metadata.

In the configuration described above, if the number of channels determined that there are presence of sound production by the sound production presence/absence determination section is greater than the number of output channels, the channel assignment section may assign the voice signals of the channels to the output channels in accordance with a predetermined algorithm.

In the configuration described above, the channel assignment section may assign the channels determined that there are presence of sound production by the sound production presence/absence determination section to the output channels in order of the sound production presence determination.

In the form described above, when the sound production presence/absence determination section determines that sound production is present in a state that the voice signals are assigned to all of the plurality of output channels, the channel assignment section may mix a voice signal determined that the sound production is present with the voice signal assigned to the predetermined output channel.

In the configuration described above, the voice communication apparatus may include a priority information storage section that stores priority information indicating a priority of each of the plurality of terminals. The channel assignment section may perform assignment processing of the voice signals in accordance with the priority information stored in the priority information storage section.

In the configuration described above, the channel assignment section may combine the metadata corresponding to the mixed voice signals, the metadata indicating the attributes of the voice signals.

### Advantages of the Invention

According to the invention, a voice separated for each speaker can be transmitted when voice communications are conducted in a state that a plurality of communication terminals are connected in a cascade mode.

### Brief Description of the Drawings

FIG. 1 is a drawing to show the general configuration of a multipoint voice connection system 1.
FIG. 2 is a block diagram to show an example of the hardware configuration of a terminal 10-n.
FIG. 3 is a drawing to show a specific example of the connection mode of the terminals 10-n.
FIG. 4 is a block diagram to show an example of the functional configuration of the terminal 10-n.
FIG. 5 is a drawing to describe channel assignment processing.
FIG. 6 is a block diagram to show an example of the functional configuration of the terminal 10-n.
Description of Reference Numerals

- 1...: Multipoint voice connection system
- 10-n...: Terminal
- 30...: Communication network
- 101...: Control section
- 102...: Communication I/F section
- 103...: Storage section
- 103...: ROM
- 103b: RAM
- 104: Operation section
- 105: Display section
- 106: Voice data generation section
- 106a: A/D converter
- 106b: Microphone
- 107: Voice data reproducing section
- 107a: D/A converter
- 107b: Loudspeaker

### Best Mode for Carrying out the Invention

The best mode for carrying out the invention will be discussed below with reference to the accompanying drawings:

### <A: Configuration>

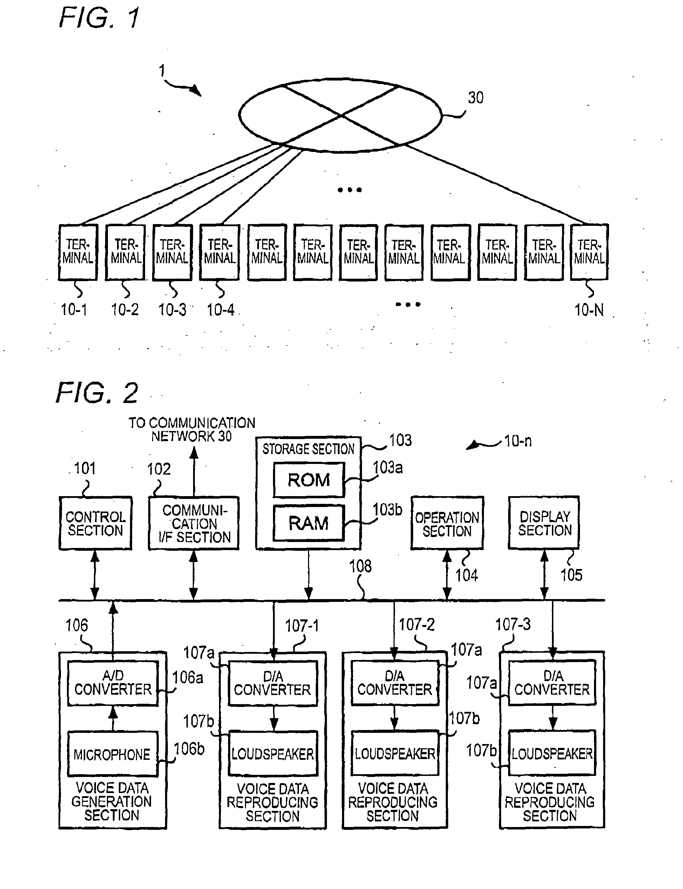

FIG. 1 is a drawing to show the general configuration of a multipoint voice connection system 1 according to an embodiment. The multipoint voice connection system of the embodiment is used for a teleconference conducted in conference rooms, etc., included in the office buildings of a company, etc. The multipoint voice connection system 1 has terminals 10-n (n = 1 to N; N is an integer of 2 or more) and a communication network 30 for connecting the terminals. The terminals 10-n have the same configuration and function.

The communication network 30 is the Internet through which the terminals shown in FIG. 1 conduct data communications conducted in accordance with a predetermined protocol. For the communication protocol used in the embodiment, RTP (Real-time Transport Protocol) is used as the communication protocol of an application layer, UDP (User Datagram Protocol) is used as the communication protocol of a transport layer, and IP (Internet Protocol) is used as the communication protocol of a network layer. RTP is a communication protocol for providing communication service for transmitting and receiving voice data and video data in an end-to-end manner in real time and is stipulated in detail in RFC1889. In RTP, an RTP packet is generated and is transmitted and received, whereby data is transferred between communication apparatus.

Next, the hardware configuration of the terminal 10-n will be discussed with reference to FIG. 2. A control section 101 shown in the figure is, for example, a CPU (Central Processing Unit) and reads and executes various control programs stored in ROM (Read Only Memory) 103a, thereby controlling the operation of each section of the terminal 10-n. A communication I/F section 102 is connected to the communication network 30 in a wired manner. The communication I/F section 102 sends an IP packet provided by encapsulating RTP packets received from the control section 101 in sequence in accordance with a communication protocol of a lower layer to the communication network 30. The encapsulating is to generate a UDP segment wherein the RTP packet is written into a payload section and further generate an IP packet with the UDP segment written into payload section. The communication I/F section 102 receives data through the communication network 30 and performs reverse processing to the encapsulating for the IP packet, thereby reading the RTP packet encapsulated in the IP packet, and outputs the packet to the control section 101.

A storage section 103 has the ROM 103a and RAM (Random Access Memory) 103b. The ROM 103a stores control programs for causing the control section 101 to execute characteristic functions of the invention. The RAM 103b stores voice data received from a voice data generation section 106 and is used as a work area by the control section 101.

The storage section 103 stores a table indicating the correspondence between each input channel and voice data reproducing sections 107-1, 107-2, 107-3 (or a loudspeaker 107b) and the like. The control section 101 supplies a voice signal for each channel received from different terminal 10-n to the voice data reproducing section 107-1, 107-2, 107-3 corresponding to the input channel of each voice signal based on the correspondence stored in the storage section 103.

An operation section 104 includes operators of digit keys, buttons, etc., and when some input is entered, the operation section 104 transmits data representing the operation description to the control section 101. A display section 105 is, for example, a liquid crystal panel and displays various pieces of data held by the terminal 10-n or received by the terminal 10-n through the communication network 30.

The voice data generation section 106 has an analog/digital (A/D) converter 106a and a microphone 106b. The microphone collects a voice and generates an analog signal representing the voice (hereinafter, "voice signal") and outputs the signal to the A/D converter 106a. The A/D converter 106a converts the sound signal received from the microphone 106b into digital form and outputs the digital data of the conversion result to the control section 101.

Each of the voice data reproducing sections 107-1, 107-2, and 107-3 reproduces voice data received from the control section 101 and has a D/A converter 107a and the loudspeaker 107b. The D/A converter 107a converts digital voice data received from the control section 101 into an analog voice signal and outputs the signal to the loudspeaker 107b. The loudspeaker 107b produces the voice represented by the voice signal received from the D/A converter 107a. In the description to follow, for convenience, if the voice data reproducing sections 107-1, 107-2, and 107-3 need not be distinguished from each other, they are called "voice data reproducing section 107." In the embodiment, the terminal 10-n including the three voice data reproducing sections 107 will be discussed, but the number of voice data reproducing sections 107 is not limited to three and may be larger than or small than three.

In the embodiment, the case where the microphone 106b and the loudspeaker 107b are contained in the terminal 10-n is described, but the voice data generation section 106 and the voice data reproducing section 107 may be provided with an input terminal and an output terminal and an external microphone may be connected to the input terminal through an audio cable; likewise, an external loudspeaker may be connected to the output terminal through an audio cable. In the embodiment, the case where the voice signal input from the microphone 106b to the A/D converter 106a and the voice signal output from the D/A converter 107a to the loudspeaker 107b are analog signals is described, but digital voice data may be input and output. In such a case, the voice data generation section 106 and the voice data reproducing section 107 need not perform A/D conversion or D/A conversion.

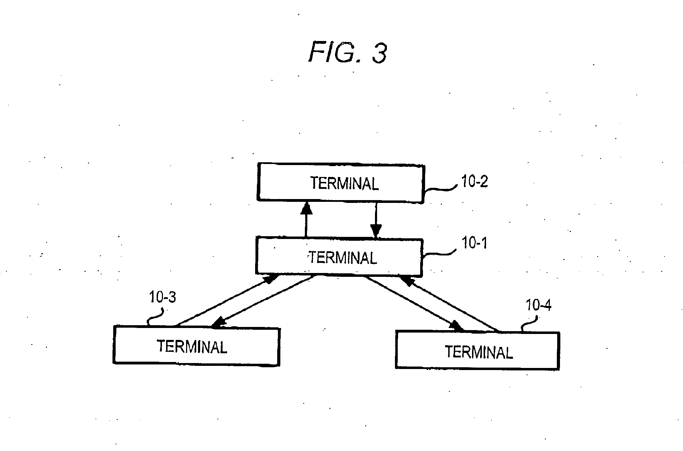

Next, the connection mode of the terminals 10-n will be discussed with reference to FIG. 3. FIG. 3 is a drawing relating to the terminal 10-1. In the multipoint voice connection system 1, the terminal 10-n is connected to other three terminals 10-n in a cascade mode, as shown in FIG. 3. Specifically, the terminal 10-1 conducts voice communications with the terminals 10-2, 10-3, and 10-4 and at this time, the terminal 10-1 conducts communications with other terminals using three reception channels and three transmission channels. In the three reception channels, a voice signal representing a voice collected in any other terminal is transmitted. The control section 101 of the terminal 10-n assigns voice data transmitted in the three reception channels of other three terminals 10-n (a total of nine input channels) to the three transmission channels of other terminals 10-n (a total of nine output channels) by performing channel assignment processing described later.

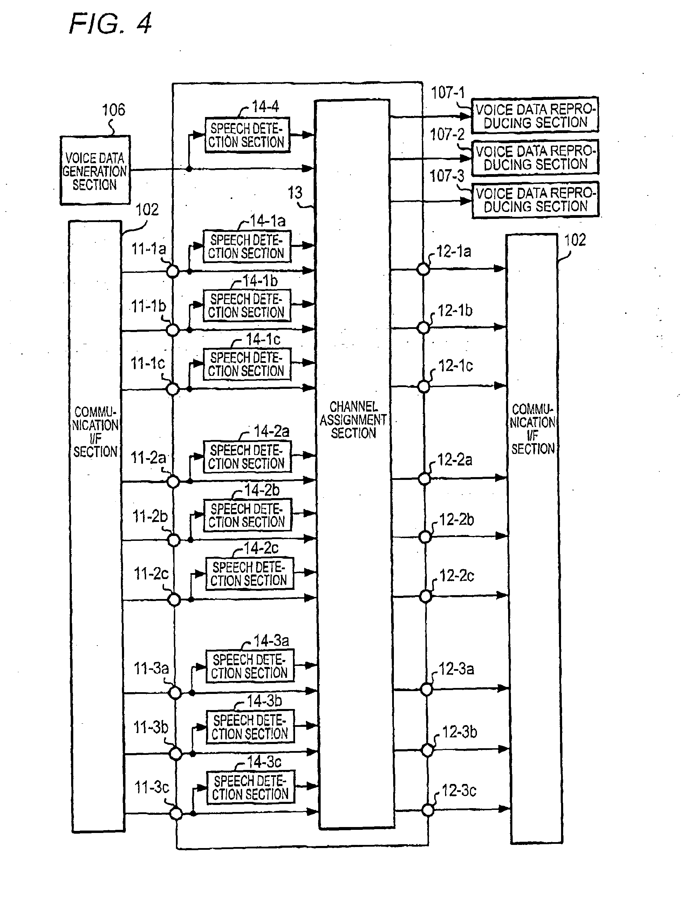

Next, the functional configuration of the terminal 10-n will be discussed with reference to FIG. 4. In the embodiment, the case where sections shown in FIG. 4 are implemented as software is described, but the sections shown in FIG. 4 may be implemented as hardware. Input sections 11-1a, 11-1b, 11-1c, ···, 11-3c and output sections 12-1a, 12-1b, 12-1c, ···, 12-3c are so-called "ports" and are configured as ports accessed according to port numbers provided under IP addresses for a plurality of terminals 10-n to connect at the same time. The port may be hardware terminals. In the description to follow, if the input sections 11-1a, 11-1b, 11-1c, ···, 11-3c need not be distinguished from each other, they are called "input section 11." Likewise, if the output sections 12-1a, 12-1b, 12-1c, ···, 12-3c need not be distinguished from each other, they are called "output section 12." Voice data for each channel received from any other terminal 10-n is input to each input section 11. Voice data for each output channel transmitted to any other terminal 10-n is output to each output section 12.

Speech detection sections 14-1a, 14-1b, 14-1c, ···, 14-3c detect the presence or absence of speech of voice data input to the input section 11. A speech detection section 14-4 detects the presence or absence of sound production of voice data supplied from the voice data generation section 106 (namely, a voice signal output from the microphone 106b). In the description to follow, if the speech detection sections 14-1a, ···, 14-3c and 14-4 need not be distinguished from each other, they are called "speech detection section 14." That is, the speech detection sections 14 determine the presence or absence of sound production about the voice data input to the input section 11 and the voice data supplied from the voice data generation section 106. As the determination processing, for example, if the sound volume level of voice data exceeds a predetermined threshold value, it may be detected that speech exists.

The channel assignment section 13 receives voice data from any other terminal 10-n connected through the communication network 30 and assigns a voice signal determined to be presence of sound production by the speech detection section 14 to the three output channels. Specifically, if the terminals 10-n are connected in the cascade mode as shown in FIG. 3, the terminal 10-1 receives voice data from three channels transmitted from each of the terminals 10-2, 10-3, and 10-4 (namely, a total of nine channels) and assigns any of the input channels to the output channel for each terminal 10-n.

### <B: Operation>

Next, the operations of the multipoint voice connection system 1 will be discussed. When a conference is started, participants using the terminals 10-n speak. The voice data generation section 106 of each terminal 10-n collects the voice of each participant and generates voice data. The generated voice data is once written into the RAM 103b. The control section 101 of the terminal 10-n reads the voice data written into the RAM 103b and determines the presence or absence of sound production of voice data.

The control section 101 of the terminal 10-n receives a voice data set of a plurality of channels from each of a plurality of terminals. The voice data received by the terminal 10-n is input to the input section 11 (see FIG. 4) corresponding to the port of one of a plurality of channels assigned to the terminal 10-n of the transmitting party. The voice data input to the input section 11 is input to the channel assignment section 13 and the speech detection section 14. The speech detection section 14 (control section 101) determines the presence or absence of sound production of voice data for each reception channel.

Next, the control section 101 assigns the input channel determined to be in a sound production state to an output channel. At this time, if the number of input channels determined to be in a sound production state is larger than the number of output channels, the control section 101 assigns the voice data of the channels to the output channels in accordance with a predetermined algorithm. Here, the control section 101 assigns the channels determined to be presence of sound production by the speech detection section 14 to the output channels in the arrival order. If voice data is assigned to all output channels, when the speech detection section 14 further detects voice data in a speech state, the control section 101 mixes the new detected voice data with voice data in a predetermined output channel.

Here, a timing acquiring method of acquisition/release of each output channel will be discussed. As the timing acquiring method, here the result of voice detection or silence detection by the speech detection section 14 about voice data input to each input channel is used. That is, when a signal indicating that a voice is detected is output from the speech detection section 14, the channel assignment section 13 assigns the input channel corresponding to the speech detection section 14 to the output channel. On the other hand, the speech detection section 14 measures silence time of voice data and when the silence time becomes a predetermined threshold value or more, the speech detection section 14 detects a silence state and outputs a signal indicating silence to the channel assignment section 13. If a silence state is detected, the channel assignment section 13 releases the output channel assigned to the input channel. Thus, the channel assignment section 13 acquires or releases the output channel in synchronization with the sound presence state or the silence state of voice data.

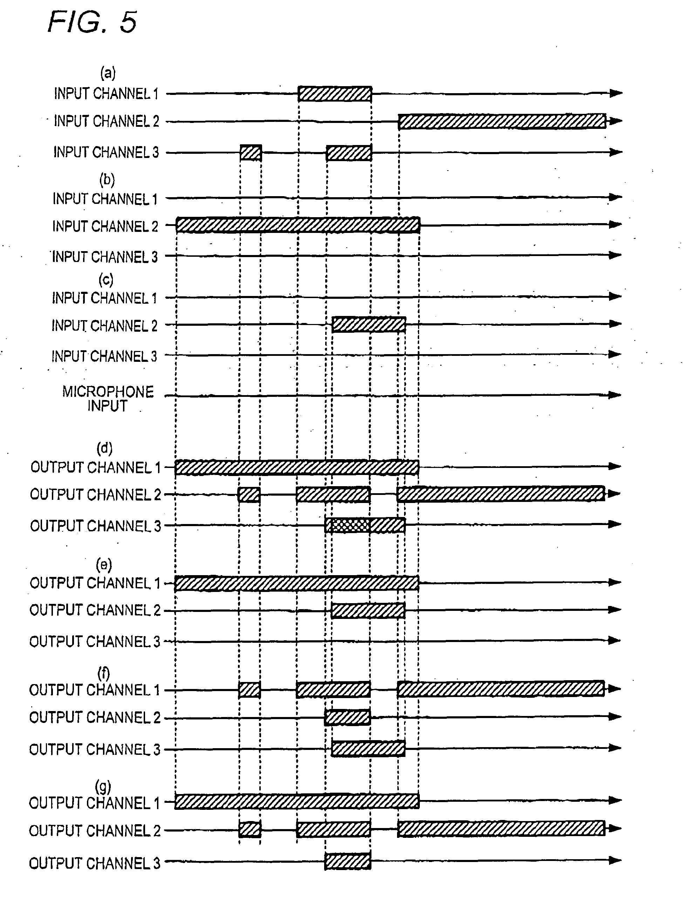

A specific operation example of channel assignment will be discussed with reference to FIG. 5. FIG. 5 is a drawing to show an operation example wherein the terminal 10-1 receives voice data in three channels from each of the terminals 10-2, 10-3, and 10-4 and assigns the received voice data to the output channels for the terminals 10-2, 10-3, and 10-4 and loudspeaker output of the home terminal 10-1; the horizontal axis indicates the time progress. FIG. 5 (a) is a drawing to show an example of a sound production state of voice data in three channels received from the terminal 10-2, FIG. 5 (b) is a drawing to show an example of a sound production state of voice data in three channels received from the terminal 10-3, and FIG. 5 (c) is a drawing to show an example of a sound production state of voice data in three channels received from the terminal 10-4. In FIGs. 5 (a) to (c), each hatched portion indicates a sound production presence state and any other portion indicates a silence state.

The control section 101 dynamically assigns input from other terminals 10-n than a terminal 10-i and microphone input to the output channels to the terminal 10-i (i = 1 to N; N is an integer of 2 or more). Specifically, for example, the control section 101 of the terminal 10-1 dynamically assigns input from the terminals 10-3 and 10-4 and microphone input of the home terminal 10-1 to the output channels of the terminal 10-2. FIG. 5 (d) is a drawing to show the assignment result of the output channels for loudspeaker output of the home terminal 10-1, FIG. 5 (e) is a drawing to show an example of the assignment result of the output channels to the terminal 10-2, FIG. 5 (f) is a drawing to show an example of the assignment result of the output channels relating to the terminal 10-3, and FIG. 5 (g) is a drawing to show an example of the assignment result of the output channels relating to the terminal 10-4. As shown in the figures, the control section 101 assigns to the output channels in the arrival order (speech detection order) in the detection order of sound production presence state. When the sound production state switches from the sound production presence state to a silence state, the control section 101 releases assignment of the output channel.

At this time, the control section 101 causes voice data in the channel where speech is early detected to take precedence over, and mixes the voice signal in the channel where speech is detected at the fourth or later with the voice signal in the third output channel. Specifically, in the example shown in FIG. 5 (d), the control section 101 mixes the voice signal in input channel 2 of the terminal 10-4 with voice data assigned to output channel 3 for loudspeaker output.

The control section 101 distributes a set of voice data assigned to a plurality of output channels to each of other terminals 10-n. That is, the control section 101 generates an RTP packet from voice data assigned to output channel. The communication I/F section 102 receives the generated RTP packet and passes the received RTP packet in sequence to the communication protocol of the lower layer, thereby generating an IP packet, and sends the IP packet to the communication network 30.

The control section 101 supplies the voice data for each input channel to the voice data reproducing section 107 corresponding to the input channel of each voice data based on the correspondence stored in the storage section 103. Accordingly, voices based on different voice data are produced from the loudspeakers 107b.

As described above, in the embodiment, voice data is transmitted individually according to a plurality of channels and the presence or absence of sound production in the voice data is determined and the channel of the voice data determined to be in a sound production presence state is assigned to the output channel. In so doing, the voice data in the channel in the speech state is sent to other terminals 10-n, whereby voice data separated for each speaker can be transmitted.

### <C: Modified examples>

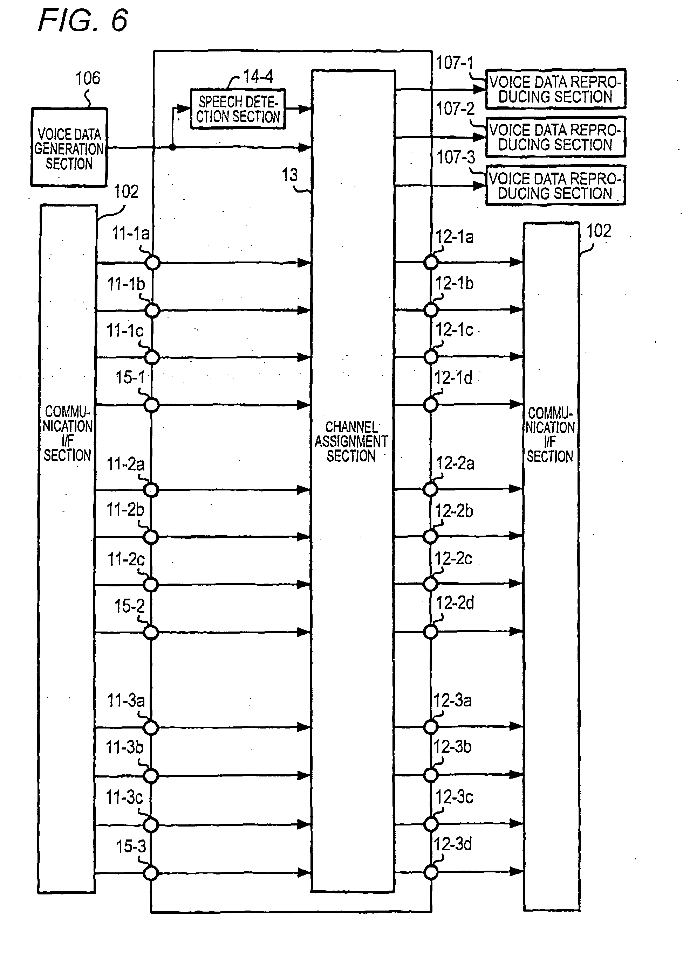

Although the embodiment of the invention has been described, it is to be understood that the invention is not limited to the embodiment described above and can be embodied in other various forms. Examples are given below. The following forms may be used in combination as required: (1) In the embodiment described above, a general-purpose channel for transmitting metadata indicating the attribute of voice data may be provided in addition to the input channels for transmitting voice data. A specific example will be discussed below with reference to FIG. 6: In the example shown in FIG. 6, input sections 15-1, 15-2, and 15-3 to which metadata transmitted through a general-purpose channel for transmitting metadata are provided in addition to input sections 11 corresponding to input channels for transmitting voice data. The metadata transmitted in the general-purpose channel contains identification information for identifying the terminal generating a voice signal transmitted to an input channel and sound production presence/absence data indicating the detection result by the speech detection section 14. In addiction, the metadata may contain speaker position information indicating the position of each speaker, sound volume information indicating the sound volume, speaker information indicating the speaker, room information indicating the room where the terminal 10-n is installed, and the like.

Output sections 12-1d, 12-2d, and 12-3d are ports for transmitting metadata. In this case, the control section 101 receives a set of voice data in a plurality of channels and the metadata of the voice data from each of other terminals 10-n and distributes a set of voice data assigned to output channels and the metadata corresponding to the voice data to each of other terminals 10-n.

If the metadata contains terminal identification information for identifying the terminal 10-n generating a voice signal for each input channel, the correspondence between the terminal identification information and the mode of sound produced from the loudspeaker of the home terminal may be stored in the storage section 103 and the control section 101 may control so as to produce a sound of voice data for each reception channel in the sound producing mode corresponding to the terminal identification information contained in the metadata corresponding to each voice data based on the correspondence stored in the storage section 103. In this case, the sound producing mode includes the mode of localization of a sound image and various modes as to which loudspeaker is to be used to produce a sound, etc., for example.

If the metadata contains sound production presence or absence data indicating the detection result of the speech detection section 14, the control section 101 may determine the pretence or absence of sound production of voice data for each reception input channel based on the sound production presence or absence data contained in the metadata, In this case, the metadata indicating the presence or absence of sound production of each voice data is transmitted to each terminal through the general-purpose channel and thus it is not necessary to provide the speech detection section for each input channel as shown in FIG. 6.

When voice data and metadata are thus transmitted between the terminals 10-n, to mix voice data of a plurality of output channels, the control section 101 may combine metadata corresponding to the voice data to be mixed.

(2) In the embodiment described above, the correspondence between the input channel and the voice data reproducing section 107 is stored in the storage section 103 and the control section 101 supplies sound data for each channel to the voice data reproducing section 107 corresponding to the channel based on the correspondence stored in the storage section 103. Instead, the terminal 10-n may be provided with an array loudspeaker, etc., capable of localizing a sound image of output voice and the correspondence between the input channel and the mode of sound image localization may be stored in the storage section 103 and the control section 101 may control so as to localize the sound image of the voice signal for each reception input channel in the mode of sound image localization corresponding to the input channel of each voice data based on the correspondence stored in the storage section 103.

(3) In the embodiment described above, the channel assignment section 13 assigns the input channels detected to be in a speech state to the output channels in the arrival order, but the mode of assigning the input channels to the output channels is not limited to it; for example, priority is determined for each terminal 10-n and the input channel may be assigned to the output channel based on the priority of each terminal 10-n. More specifically, for example, priority information indicating the priority of each of other terminals 10-n connected may be previously stored in the storage section 103 and the control section 101 may perform assignment processing in accordance with the priority information stored in the storage section 103. To sum up, if the number of channels determined to be presence of sound production by the speech detection section 14 is larger than the number of output channels, the control section 101 may assign voice data in the input channels to the output channels in accordance with a predetermined algorithm,

In the embodiment described above, voice data with speech early detected takes precedence over any other voice data and the voice data detected at the fourth or later time is mixed with the third output channel; instead, the voice data detected at the fourth or later time may be ignored (discarded).

(4) In the embodiment described above, the case where the communication network 30 is the internet is described, but the communication network 30 may be a LAN (Local Area Network), etc. The case where the terminals 10-n are connected to the communication network 30 in a wired manner is described, but the communication network 30 may be a wireless packet communication network of a wireless LAN, etc., for example, and the terminals 10-n may be connected to the wireless packet communication network.

In the embodiment described above, the mixing function of voice data characteristic for the terminal 10-n is implemented as a software module, but the hardware modules having the functions described above may be combined to form the terminal 10-n according to the invention.

(5) In the embodiment described above, the case where RTP is used as the communication protocol of the application layer relating to transmission and reception of voice data is described, but any other communication protocol may be used. This also applies to the transport layer, the network layer, and the data link layer and any other communication protocol than UDP or IP used in the embodiment may be used.

(6) In the embodiment described above, the case where the number of output channels is three is described, but the number of output channels is not limited to three and may be larger than or smaller than three and the number of input channels and the number of output channels can be set to various numbers. However, if the number of channels is "three," even if conversation is made between two persons at present and a third person participates in the conversation, conversation from the third person to the former two persons is made possible without releasing the current occupied voice communication channel. If another person further participates in the conversation, any voice communication channel must be released. In fact, however, the case where "four" persons conduct conversation concerning the same matter is rare. Even if four persons conduct conversation concerning the same matter, effective conversation is hard to conduct. Thus, simultaneous conversation of at most "three" person is general and real. On the other hand, simultaneous conversation of "four" or more persons is also possible by increasing the number of voice communication channels. However, as the number of channels increases, the resource amount assigned to each channel lessens and thus the number of channels needs to be limited to some degree to realize stress-free conversation or conversation maintaining the voice quality. Considering these, the number of channels is set to "three," whereby it is made possible to use realistic and most efficient communication resources.

(7) In the embodiment described above, the case where the terminal 10-n does not compress voice data generated by the voice data generation section 106 for output is described, but compression processing may be performed for voice data. For example, voice data may be compressed and output by a codec of software for compressing and decompressing voice data. Voice data may be suppressed using an art of so-called silence suppression not sending a packet with the sound volume level of generated voice data falling below a predetermined threshold value.

(8) In the embodiment described above, the case where the input sections 11 and the output sections 12 provided in the terminal 10-n are so-called ports is described; in the case, for example, the input section 11 and the channel assignment section 13 are connected by a software module. However, the input sections and the output sections may be implemented as hardware input terminals and output terminals and the input terminals and the output terminals and the channel assignment section may be connected by the hardware configuration of an electronic circuit, etc., so that they become the above-described correspondence.
The case where voice data is transmitted and received by a software module between the output section 12 and the channel assignment section 13 is described. However, the input section 11 and the output section 12 provided for the channel assignment section 13 may be likewise implemented as hardware and voice data may be transmitted and received between the channel assignment section 13 and the output section 12 according to the hardware configuration.

(9) The programs executed by the control section 101 of the terminal 10-n in the embodiment described above can be provided in a state in which the programs are recorded on a record medium such as magnetic tape, a magnetic disk, a flexible disk, an optical record medium, a magneto-optic record medium, or ROM. The programs can also be downloaded to the terminal 10-n via a network such as the Internet.

In the embodiment described above, the data communication system of the voice teleconference system using voice data has been described; to use video data or any other communication data for mutually constructing communications, the configuration and the processing relating to the above-described embodiment can be used. In the embodiment described above, the communication network of the Internet, etc., is shown by way of example, but the embodiment can also be applied to power line communications, communication through ATM (Asynchronous Transfer Mode), wireless communications, etc.

While the invention has been described in detail with reference to the specific embodiments, it will be obvious to those skilled in the art that various changes and modifications can be made without departing from the spirit, the scope, or the intention of the invention.
The invention is based on Japanese Patent Application (No. 2007-290793) filed on November 8, 2007, the subject matter of which is incorporated herein by reference.

## Claims

1. A voice communication apparatus comprising:
a reception section that receives a set of voice signals of a plurality of channels from each of a plurality of terminals;
an acquisition section that acquires a voice signal output from a sound collection section;
a sound production presence/absence determination section that determines the presence or absence of sound production about the voice
signals of the a plurality of channels received by the reception section and the voice signal acquired by the acquisition section respectively;
a channel assignment section that assigns the voice signal, which is determined that there is the presence of the sound production by the sound production presence/absence determination section, to a plurality of output channels; and
a distribution section that distributes a set of voice signals assigned to the plurality of output channels by the channel assignment section to each of the plurality of terminals.

2. The voice communication apparatus according to claim 1, wherein the reception section receives a set of voice signals of three channels from each of the plurality of terminals; and
wherein the channel assignment section assigns the voice signal, which is determined that there is the presence of sound production by the sound production presence/absence determination section, to any of three output channels.

3. The voice communication apparatus according to claim 1 or 2, further comprising:
a storage section that stores a correspondence between the channels and sound producing sections for outputting voices based on the voice signals; and
an output section that supplies the voice signal for each of the channels received by the reception section to the sound producing section corresponding to the channel of each of the voice signals based on the correspondence stored in the storage section.

4. The voice communication apparatus according to claim 1 or 2, comprising:
a storage section that stores a correspondence between the channels and modes of sound image localization; and
a sound image localization control section that localizes the sound image of the voice signal for each of the channels received by the reception section in the mode of sound image localization corresponding to the channel of each of the voice signals based on the correspondence stored in the storage section.

5. The voice communication apparatus according to any one of claims 1 to 4, wherein the reception section receives the set of voice signals of the plurality of channels and metadata indicating attributes of the voice signals from each of the plurality of terminals respectively; and
wherein the distribution section distributes the set of voice signals assigned to the plurality of output channels by the channel assignment section and the metadata corresponding to the voice signals to each of the plurality of terminals.

6. The voice communication apparatus according to claim 5, wherein the metadata contains terminal identification information for identifying the terminal which generates the voice signal for each of the channels,
the voice communication apparatus further comprising:
a storage section that stores a correspondence between the terminal identification information and a mode of sound producing; and
an output control section that outputs the voice signal for each of the channels received by the reception section to the sound producing section so as to produce a sound in the mode of sound producing in response to the terminal identification information corresponding to each of the voice signals based on the correspondence stored in the storage section.

7. The voice communication apparatus according to claim 5 or 6, wherein the metadata contains sound production presence/absence data indicating a determination result of the sound production presence/absence determination section; and
wherein the sound production presence/absence determination section determines the presence or absence of the sound production about the voice signals of the plurality of channels received by the reception section based on the sound production presence/absence data contained in the metadata.

8. The voice communication apparatus according to any one of claims 1 to 7, wherein if the number of channels determined that there are presence of sound production by the sound production presence/absence determination section is greater than the number of output channels, the channel assignment section assigns the voice signals of the channels to the output channels in accordance with a predetermined algorithm.

9. The voice communication apparatus according to claim 8, wherein the channel assignment section assigns the channels determined that there are presences of sound production by the sound production presence/absence determination section to the output channels in order of the sound production presence determination.

10. The voice communication apparatus according to claim 8, wherein when the sound production presence/absence determination section determines that sound production is present in a state that the voice signals are assigned to all of the plurality of output channels, the channel assignment section mixes a voice signal determined that the sound production is present with the voice signal assigned to the predetermined output channel.

11. The voice communication apparatus according to claim 8, further comprising:
a priority information storage section that stores priority information indicating a priority of each of the plurality of terminals,
wherein the channel assignment section performs assignment processing of the voice signals in accordance with the priority information stored in the priority information storage section.

12. The voice communication apparatus according to claim 10, wherein the channel assignment section combines the metadata corresponding to the mixed voice signals, the metadata indicating the attributes of the voice signals.
